# EUROPÄISCHE PATENTSCHRIFT

(11) **EP 1 890 839 B1**
(45) Veröffentlichungstag und Bekanntmachung des Hinweises auf die Patenterteilung: **05.08.2009**
(21) Anmeldenummer: 06742543.9
(22) Anmeldetag: 06.04.2006
(51) Int. Cl.: B23Q 11/00, B23Q 15/12, G05B 19/416

(54) **VERFAHREN ZUR SCHWINGUNGSOPTIMIERUNG EINER WERKZEUGMASCHINE**
METHOD FOR VIBRATION-OPTIMIZING A MACHINE TOOL
PROCEDE D'OPTIMISATION DES VIBRATIONS D'UNE MACHINE-OUTIL

(30) Priorität: 20.05.2005 DE 102005023317
(43) Veröffentlichungstag der Anmeldung: 27.02.2008
(73) Patentinhaber: P & L GmbH & Co. KG, 20148 Hamburg (DE)
(72) Erfinder: RÖDERS, Jürgen, 29614 Soltau (DE)
(74) Vertreter: Weber, Joachim
(86) Internationale Anmeldenummer: PCT/EP2006/003135
(87) Internationale Veröffentlichungsnummer: WO 2006/122611

(56) Entgegenhaltungen:
- DE-A1- 2 520 946
- GB-A- 1 217 962
- US-A- 3 744 353
- US-A- 5 170 358
- US-B1- 6 349 600
- US-B1- 6 367 359

## Beschreibung

Die Erfindung bezieht sich auf ein Verfahren zur Schwingungsoptimierung einer Werkzeugmaschine.

Bei Werkzeugmaschinen wird insbesondere zur spanenden Bearbeitung von Werkstücken entweder das Werkstück oder das Werkzeug in Drehung versetzt. Bei Fräsmaschinen ist das Werkzeug an einer angetriebenen Welle gelagert, während bei Drehmaschinen das Werkstück entsprechend in Drehung versetzt wird.

Bei der Hochgeschwindigkeitsbearbeitung werden Drehzahlen eingesetzt, die im Bereich von 40.000 Upm oder mehr liegen. Um die gewünschte Bearbeitungspräzision realisieren zu können, ist es erforderlich, die angetriebene Welle möglichst optimal auszuwuchten. Dies ist jedoch nicht immer vollständig möglich, vielmehr können sich geringe Restunwuchten einstellen, die sich beispielsweise auch durch das Spannen des Werkstücks oder Werkzeugs ergeben können. Auch das Werkzeug oder das Werkstück selbst können zur Unwucht beitragen.

Durch die vorhandenen Unwuchten entstehen Schwingungen, die zu Bearbeitungsungenauigkeiten und zu verschlechterten Oberflächenqualitäten führen. Aus diesem Grunde sind Schwingungen jeglicher Art bei Werkzeugmaschinen unerwünscht.

Eine günstige Beeinflussung des Schwingungsverhaltens kann durch geeignete Konstruktionen der Werkzeugmaschine selbst, des Gestells, des Maschinentisches oder weitere Komponenten erreicht werden. Die Unterdrückung von Schwingungen bei drehenden Bauelementen ist hierdurch jedoch nicht oder nur sehr bedingt möglich.

Weck, Manfred: Werkzeugmaschinen, Fertigungssysteme Band 4: Messtechnische Untersuchung und Beurteilung, VDI-Verlag, Düsseldorf, 1992, Seite 354 und 355, beschreibt Maßnahmen zur Verbesserung des Ratterverhaltens von Werkzeugmaschinen, wobei insbesondere während der Bearbeitung eine Drehzahlmodulation vorgeschlagen wird.

Die DD 137 547 C beschreibt eine Anordnung zur Umgehung standzeitungünstiger Bearbeitungsparameter. Dabei wird das Ziel verfolgt, das Arbeiten in ungünstigen Frequenzbereichen beim Drehen und Fräsen auszuschließen. Die in dieser Druckschrift beschriebene Lösung sieht vor, dass durch einen oder mehrere am oder in der Nähe des Werkzeugs befestigte Schwingungsaufnehmer Schwingungen des Werkzeugs während des Betriebs laufend gemessen und mit einem vorgegebenen Sollwert verglichen werden, wobei bei Überschreitung dieses Sollwerts eine Schnittgeschwindigkeitsänderung durchgeführt wird.

Die US 3,744,353 A beschreibt ein Verfahren, bei welchem während der Bearbeitung in kurzen Zeitabständen die Schnittgeschwindigkeit des Werkzeugs verändert wird, um auf diese Weise festzustellen, ob sich Oberflächenveränderungen an dem Werkstück ergeben. Es handelt sich somit nicht um eine Voranalyse und Einstellung des Schwingungsverhaltens des Gesamtsystems, sondern um einen während der Bearbeitung vorgenommenen Versuch, das Zerspanungsergebnis zu verbessern.

Aus der US 5,170,358 A ist ein Verfahren vorbekannt, bei welchem sowohl die Drehzahl als auch die Zustellbewegung des Werkzeugs verändert werden. Dabei wird ein Zerspanungstestlauf durchgeführt, um während dieses Test-Zerpanungsvorgangs bei vorgegebenen Schnitttiefen, Drehzahlen und Zustellraten Rückschlüsse auf das Verhalten des Gesamtsystems während der Zerspanung gewinnen zu können.

Die GB 1 217 962 A beschreibt ein weiteres Verfahren, bei welchem ebenfalls während des Zerspanvorganges die Drehzahlen verändert werden, um den Zerspanvorgang zu optimieren.

Die US-B1-6 349 600 beschreibt ein Verfahren, bei welchem die Spindel einer Fräsmaschine oder einer Drehmaschine bei verschiedenen Drehzahlen hinsichtlich ihres Schwingungsverhaltens untersucht wird. Das an der Spindel befestigte Werkzeug wird dabei zur Simulierung des Zerspanungsvorganges aktiv durch einen Magneten angeregt, um auf diese Weise die Auswirkungen von Bearbeitungskräften bei unterschiedlichen Drehzahlen auf das Gesamtsystem zu ermitteln. Das Ziel liegt darin, die durch Bearbeitungskräfte angeregten Ratterschwingungen zu minimieren.

Der Erfindung liegt die Aufgabe zugrunde, ein Verfahren der eingangs genannten Art zu schaffen, welches bei einfachem Aufbau und einfacher, kostengünstiger Anwendung eine Schwingungsoptimierung einer Werkzeugmaschine ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass (entweder automatisch oder durch einen Benutzer) ein Drehzahlbereich gewählt wird, welcher nachfolgend durchlaufen wird, entweder kontinuierlich oder schrittweise. In dem Drehzahlbereich werden die auftretenden Schwingungen gemessen. Es kann dann eine Drehzahl ermittelt werden, bei welcher sich eine Optimierung der Schwingungsdämpfung bzw. niedrigste Schwingungen ergeben. Mit dieser Drehzahl wird dann die nachfolgende Bearbeitung eines Werkstücks erfolgen. Der zu durchlaufende Drehzahlbereich wird erfindungsgemäß so gewählt, dass die sich aus dem Bearbeitungsprozess hinsichtlich der Schnittparameter etc. vorgewählte Drehzahl in dem Bereich befindet.

Erfindungsgemäß ist weiterhin vorgesehen, dass die angetriebene Welle zunächst mit einer Solldrehzahl in Drehung versetzt wird. Nachfolgend wird, ausgehend von der Solldrehzahl, die Drehzahl erhöht und erniedrigt. Die Drehzahl durchläuft somit einen vorgegebenen Drehzahlbereich oberhalb und unterhalb der Solldrehzahl. Beim Durchlaufen dieses Drehzahlbereichs werden jeweils die auftretenden Schwingungen gemessen oder ermittelt. Da die Schwingungen innerhalb des Drehzahlbereiches unterschiedlich stark ausgeprägt sind, auch abhängig von Resonanzschwingungen, von der Eigensteifigkeit der Komponenten oder anderer Faktoren, ergibt sich in dem durchlaufenen Drehzahlbereich ein optimaler Bereich, bei welchem die auftretenden Schwingungen im Vergleich zu der Solldrehzahl geringer sind. Wenn nun die angetriebene Achse mit dieser Drehzahl angetrieben wird, lässt sich eine signifikante Verbesserung der Bearbeitungsqualität erzielen.

Durch geeignete Wahl des Drehzahlbereiches, um welchen die Drehzahl, ausgehend von der Solldrehzahl erhöht und erniedrigt wird, ist es möglich, die sonstigen Bearbeitungsbedingungen weiterhin in einem optimalen oder angemessenen Bereich zu halten.

Bei dem erfindungsgemäßen Verfahren wird berücksichtigt, dass die Stärke der Schwingungen je nach Drehzahl der rotierenden Welle unterschiedlich ist. Dabei hat sich bei dem erfindungsgemäßen Verfahren herausgestellt, dass die Schwingungen nicht zwangsläufig mit zunehmender Drehzahl zunehmen. Vielmehr ergeben sich sowohl in der mechanischen Struktur der rotierenden Welle als auch der Werkzeugmaschine selbst Frequenzen, bei welchen Resonanzen auftreten, welche die Schwingung verstärken. Dies erweist sich, wie oben erläutert, als besonders nachteilig auf die Bearbeitung eines Werkstücks aus.

Zusätzlich verursachen Schwingungen störende Lärmemissionen, die ebenfalls reduziert werden sollen.

Unter Verwendung des erfindungsgemäßen Verfahrens ist es somit möglich, Schwingungen automatisch zu minimieren und automatisch eine Optimierung des Schwingungsverhaltens und damit eine Optimierung der Bearbeitung zu erzielen.

Das erfindungsgemäße Verfahren kann wie folgt angewendet werden:

Nach dem Einschalten des Antriebs der angetriebenen Welle und nach Erreichen der gewünschten Solldrehzahl (welche manuell oder durch ein Bearbeitungsprogramm vorgegeben werden kann) wird zunächst automatisch durch das Bearbeitungsprogramm ein vorgegebener Drehzahlbereich um die gewählte Solldrehzahl durchlaufen. Dies bedeutet, dass ein Drehzahlbereich durchlaufen wird, welcher um einen vorgegebenen Betrag höher bzw. niedriger als die Solldrehzahl ist. Hierdurch wird die Drehzahl der angetriebenen Welle gegenüber der Solldrehzahl entsprechend verringert oder erhöht. Es versteht sich, dass das erfindungsgemäße Verfahren nicht darauf beschränkt ist, einen gleichen Drehzahlbetrag, ausgehend von der Solldrehzahl, zu erhöhen und zu erniedrigen. Es ist vielmehr auch möglich, die Schwingungsoptimierung nur in einer Richtung durchzuführen, d.h., nur durch eine Erhöhung oder nur durch eine Erniedrigung der Drehzahl. Dies hängt von den gewählten Bearbeitungsparametern sowie sonstigen Randbedingungen ab. Es ist auch möglich, die Erhöhung und die Erniedrigung des Drehzahlbereiches mit unterschiedlichen Werten vorzunehmen.

Während der erfindungsgemäß vorgesehenen Veränderung der Drehzahl wird die Stärke der jeweils auftretenden Schwingung gemessen. Dabei kann der Drehzahlbereich entweder kontinuierlich oder stufenweise durchlaufen werden.

In der Steuerung der Werkzeugmaschine oder in einem geeigneten Zusatzgerät werden dabei die auftretenden Schwingungen gemessen und für die einzelnen Drehzahlen jeweils verglichen. Hierdurch ist es möglich, diejenige Drehzahl oder diejenigen Drehzahlbereiche zu ermitteln, bei welcher oder bei welchen sich die günstigsten Schwingungswerte oder das günstigste Schwingungsverhalten ergeben. Ausgehend von dieser Drehzahl oder diesem Drehzahlbereich kann dann die Bearbeitung eines Werkstücks unter optimalen Bedingungen erfolgen.

Da bei dem erfindungsgemäßen Verfahren die Drehzahlbereiche jeweils durchlaufen und hinsichtlich der auftretenden Schwingungen automatisch untersucht werden, ist es automatisch möglich, Resonanzschwingungen zu vermeiden oder in bestmöglicher Weise zu unterdrücken.

Es versteht sich, dass erfindungsgemäß das Resultat des Verfahrens umso besser werden wird, je größer der bei der Erhöhung bzw. Erniedrigung der Drehzahl der zu durchlaufende Drehzahlbereich ist. Da dieser u.a. durch die Schnittparameter, die Geometrie des Werkstücks und/oder die Geometrie des Werkzeugs vorgegeben ist, kann mittels des erfindungsgemäßen Verfahrens auf wirkungsvolle Weise eine automatisierte Schwingungsoptimierung bei unterschiedlichsten Werkstücken, Werkzeugen und Bearbeitungsparametern vorgenommen werden. Erfindungsgemäß ist es somit vorgesehen, während des Bearbeitungsvorgangs diesen zu unterbrechen und den Vorgang der Schwingungsoptimierung durchzuführen, beispielsweise, wenn sich an einem Werkstück in Abhängigkeit von dessen Geometrie die Zerspanungsbedingungen ändern.

Weiterhin kann es erfindungsgemäß vorteilhaft sein, das Verfahren in bestimmten Zeitintervallen zu wiederholen, um thermische Eigenschaften und thermische Veränderungen, beispielsweise durch die innere Erwärmung eines Motors oder Lagers, durch welche Resonanzschwingungen auftreten können, zu kompensieren. Dabei kann es auch günstig sein, die Anwendung des erfindungsgemäßen Verfahrens erst dann durchzuführen, wenn sich ein statischer Zustand hinsichtlich der thermischen Belastung der Werkzeugmaschine ergeben hat.

Das erfindungsgemäße Verfahren kann mittels eines geeigneten Sensors durchgeführt werden, beispielsweise eines Beschleunigungssensors. Dieser kann beispielsweise im Bereich der angetriebenen Welle angebracht sein, beispielsweise an einem Bauteil, welches in der Bewegungsachse der angetriebenen Welle bewegbar ist. So ist es beispielsweise möglich, den Sensor am Lagergehäuse einer Werkzeugspindel anzubringen.

In einer weiteren vorteilhaften Ausgestaltung der Erfindung wird zumindest ein Positionssensor der Werkzeugmaschine verwendet wird, welcher auch dazu dient, Bewegungen der einzelnen Komponenten der Werkzeugmaschine zu steuern bzw. zu regeln (Bewegungen längs der X-, Y- und Z-Achse). Werkzeugmaschinen, insbesondere solche Werkzeugmaschinen, die in Bearbeitungszentren verwendet werden, weisen üblicherweise mehrere Bewegungsachsen auf, um Relativbewegungen zwischen dem Werkzeug und dem Werkstück zu realisieren. Die Bewegungen längs dieser Achsen sind gesteuert ausgeführt. Um die Position der Bewegungen der einzelnen Achsen zu erfassen, sind Messwertaufnehmer vorgesehen, beispielsweise Glasmaßstäbe bei Linearachsen. Mit Hilfe dieser Messwertaufnehmer wird die Ist-Position an der jeweiligen Bewegungsachse erfasst. Die Werkzeugmaschine verfährt die jeweiligen Achsen auf die gewünschten Sollpositionen, indem sie die Differenz zwischen Ist-Position und Sollposition für die einzelnen Achsen ausregelt.

Um erfindungsgemäß die auftretenden Schwingungen zu messen und eine Schwingungsoptimierung durchzuführen, ist es auf besonders einfache Weise möglich, die Signale eines oder mehrerer Messwertaufnehmer in den Bewegungsachsen der Werkzeugmaschine auch für das erfindungsgemäße Verfahren zu nutzen. Hierdurch können Schwingungen erfasst werden, insbesondere Schwingungen der das Werkzeug oder Werkstück tragenden angetriebenen Welle. Diese Schwingungen können somit mittels der Messwertaufnehmer gemessen werden. Hierbei ergeben sich beispielsweise geringe Schwankungen in dem Positionssignal. Abhängig von der Größe der Schwingung ändert sich somit auch die Schwankung des Positionssignals.

Es ist somit erfindungsgemäß nicht erforderlich, eine Vielzahl zusätzlicher Sensoren zu installieren. Vielmehr können die bereits vorhandenen Messwertaufnehmer für das erfindungsgemäße Verfahren genutzt werden. Hierdurch ergibt sich eine ganz erhebliche Kostenreduzierung.

Bei bestimmten Bearbeitungen von Werkstücken wird die Drehzahl entweder des Werkstücks oder des Werkzeugs exakt auf die Vorschubgeschwindigkeit der jeweiligen Bewegungsachsen oder Zustellachsen abgestimmt, um einen bestimmten Vorschub, beispielsweise pro Zahn oder Schneide des Werkzeugs zu realisieren. Veränderungen der Drehzahl durch Anwendung des erfindungsgemäßen Verfahrens führen somit auch zu einer Veränderung der Zustellgeschwindigkeiten der Bewegungsachsen. In günstiger Weiterbildung des erfindungsgemäßen Verfahrens ist vorgesehen, dass auch die Zustellgeschwindigkeiten automatisch angepasst werden, sobald die Drehzahl zur Schwingungsoptimierung verändert wurde, um somit den Bearbeitungsvorgang anzupassen.

Da die einzelnen Bewegungsachsen einer Werkzeugmaschine durch die auftretenden Schwingungen unterschiedlich beeinflusst werden, kann es bei dem erfindungsgemäßen Verfahren günstig sein, mehrere, d.h., mehr als einen Messwertaufnehmer für die Analyse der Schwingungsstärke einzubeziehen. Bei einer Portalfräsmaschine werden beispielsweise die vertikale Bewegungsachse und die obere horizontale Bewegungsachse, welche die Spindel verfahren, durch die Schwingungen beeinflusst. Daher lassen sich aus den Signalen der beiden zugeordneten Messwertaufnehmer die auftretenden Schwingungen besonders gut erfassen. Bei einer Portalmaschine ist es somit günstig, beide Signale (horizontale Bewegungsachse und vertikale Bewegungsachse) einzubeziehen. Bei einigen Bauformen von Werkzeugspindeln kann sich das Schwingungsverhalten auch ändern. Dieses kann stärker vertikal oder stärker radial ausgeprägt sein, abhängig von der Drehzahl und den weiteren Parametern. Auch dies beeinflusst die Messwertaufnahme. Auch diese Beeinflussungsfaktoren können unter Anwendung des erfindungsgemäßen Verfahrens optimiert werden.

Im Folgenden wird die Erfindung anhand eines Ausführungsbeispiels in Verbindung mit der Zeichnung beschrieben. Dabei zeigt:
- Fig. 1: eine vereinfachte perspektivische Vorderansicht einer Werkzeugmaschine, und
- Fig. 2: eine graphische Darstellung der Schwingungsamplitude in Abhängigkeit von den Drehzahlen.

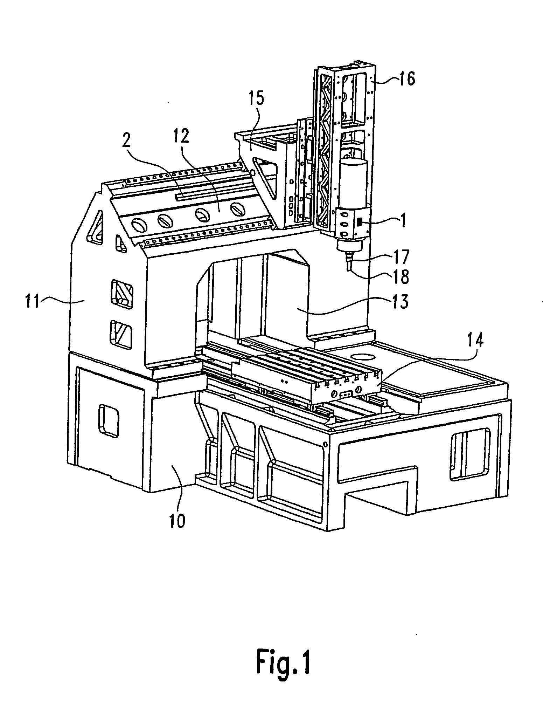

Die Fig. 1 zeigt eine Werkzeugmaschine mit einem Maschinentisch 10, auf welchem ein Portal 11 mit einer Traverse 12 montiert ist. In einem Arbeitsraum 13, welcher durch das Portal 11 gebildet wird, ist längs einer horizontalen Bewegungsachse ein Schlitten 14 verfahrbar. Ein Querschlitten 15 ist längs einer weiteren horizontalen Achse relativ zu der Traverse 12 verfahrbar. Der Querschlitten 15 trägt einen Vertikalschlitten 16, an welchem eine Spindel 17 gelagert ist, welche eine drehbare Welle bildet, an deren Ende ein Werkzeug 18 montiert ist. Auf die Darstellung der Befestigung eines Werkstücks auf dem Schlitten 14 wurde aus Gründen der einfacheren Darstellung verzichtet. Der grundsätzliche Aufbau der Werkzeugmaschine ist aus dem Stand der Technik bekannt, so dass auf weitere Ausführungen an dieser Stelle verzichtet werden kann.

Bei dem gezeigten Ausführungsbeispiel ist ein Sensor 1 am Gehäuse der Spindel 17 angebracht, durch welchen Schwingungen der Spindel 17 ermittelt werden können.

Mit dem Bezugszeichen 2 ist ein Messaufnehmer (Messwertaufnehmer) bezeichnet, welcher an der Traverse 12 vorgesehen ist, um Horizontalbewegungen des Querschlittens 15 zu ermitteln und um den Schlitten 15 zu steuern bzw. zu regeln. Auftretende Schwingungen können somit direkt durch Änderungen des Positionssignals des Messaufnehmers 2 ermittelt werden, beispielsweise direkt als Schwingungen oder zumindest als verstärktes Rauschen.

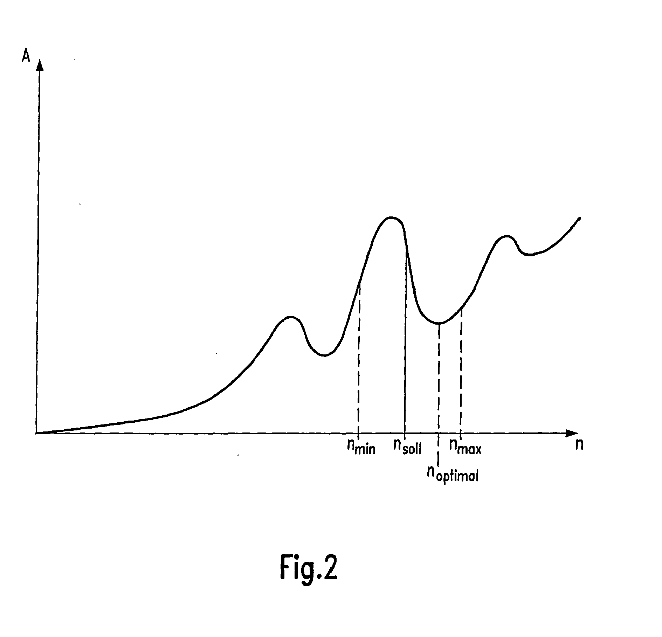

Die Fig. 2 zeigt eine graphische Darstellung der Schwingungen (Amplitude) A in Abhängigkeit von der Drehzahl n der Spindel 17. Dabei ist die Drehzahl n_{SOLL}, auf welche erfindungsgemäß zunächst die Spindel 17 gebracht wird. Die Drehzahl wird dann erfindungsgemäß um einen vorgegebenen Wert erhöht bzw. erniedrigt. Die Grenzen der Erhöhung bzw. Erniedrigung sind durch die Werte n_{MAX} bzw. n_{MIN}. Wie aus Fig. 2 ersichtlich ist, ergibt sich über den Drehzahlbereich ein Verlauf der Schwingungsamplitude. Dieser hat bei dem Drehzahlwert n_{OPTIMAL} einen Minimalwert. Hierbei handelt es sich hierbei um den optimalen Drehzahlwert, der bei dem erfindungsgemäßen Verfahren eingestellt wird und bei welchem eine Optimierung des Schwingungsverhaltens vorliegt.

### Bezugszeichenliste

- 1: Sensor
- 2: Messaufnehmer/Messwertaufnehmer
- 10: Maschinentisch
- 11: Portal
- 12: Traverse
- 13: Arbeitsraum
- 14: Schlitten
- 15: Querschlitten
- 16: Vertikalschlitten
- 17: Spindel
- 18: Werkzeug

## Patentansprüche

1. Verfahren zur spanenden Bearbeitung eines Werkstücks mittels einer Werkzeugmaschine und zur Schwingungsoptimierung der Werkzeugmaschine bei der Bearbeitung, bei welchem ein Bearbeitungsvorgang unterbrochen wird, bei welchem eine angetriebene Welle (17) mit einer Soll-Drehzahl in Drehung versetzt wird, wobei keine weiteren Bewegungen längs von Bewegungsachsen der Werkzeugmaschine durchgeführt werden, bei welchem nachfolgend automatisch die Soll-Drehzahl um zumindest einen vorgegebenen Wert erhöht und/oder erniedrigt wird, wobei in dem höher und/oder niedriger als die Soll-Drehzahl gewählten Drehzahlbereich die auftretenden Schwingungen gemessen werden, wobei eine optimale Drehzahl mit minimierter Schwingung ermittelt und eingestellt wird, und bei welchem nachfolgend die Bearbeitung des Werkstücks mit der optimalen Drehzahl erfolgt.

2. Verfahren nach Anspruch 1, **dadurch gekennzeichnet, dass** der Drehzahlbereich mit der höheren und der niedrigeren Drehzahl kontinuierlich durchlaufen wird.

3. Verfahren nach Anspruch 1, **dadurch gekennzeichnet, dass** der Drehzahlbereich mit der höheren und der niedrigeren Drehzahl stufenweise durchlaufen wird.

4. Verfahren nach einem der Ansprüche 1 bis 3, **dadurch gekennzeichnet, dass** das Verfahren in vorgegebenen Zeitintervallen bei Unterbrechung der Bearbeitung wiederholt wird.

5. Verfahren nach einem der Ansprüche 1 bis 4, **dadurch gekennzeichnet, dass** zur Ermittlung der Schwingungen zumindest ein zusätzlicher Sensor (1) verwendet wird.

6. Verfahren nach einem der Ansprüche 1 bis 5, **dadurch gekennzeichnet, dass** zur Ermittlung der Schwingungen zumindest ein Messaufnehmer (2) verwendet wird.

7. Verfahren nach einem der Ansprüche 1 bis 6, **dadurch gekennzeichnet, dass** zumindest eine Vorschubbewegung einer Bewegungsachse der Werkzeugmaschine der geänderten optimalen Drehzahl angepasst wird.

8. Verfahren nach einem der Ansprüche 1 bis 7, **dadurch gekennzeichnet, dass** die Messung der Drehzahl als Messung der Amplitude der Schwingung erfolgt.

9. Verfahren nach einem der Ansprüche 1 bis 8, **dadurch gekennzeichnet, dass** die Messung der Drehzahl als Messung einer Signalveränderung eines Messaufnehmers erfolgt.

10. Verfahren nach einem der Ansprüche 1 bis 9, **dadurch gekennzeichnet, dass** das Verfahren in vorgegebenen Zeitintervallen wiederholt wird.

11. Verfahren nach einem der Ansprüche 1 bis 10, **dadurch gekennzeichnet, dass** das Verfahren bei einer Veränderung der Bearbeitungsparameter eines Werkstücks wiederholt wird.

## Claims

1. A method for machining a workpiece by means of a machine tool and for vibration-optimizing the machine tool during the processing, in which a processing step is interrupted, in which a driven shaft (17) is rotated with a target speed, wherein no further movements longitudinal of movement axes of the machine tool are performed, in which subsequently the target speed is automatically increased and/or decreased by at least one predetermined value, wherein the occurring vibrations are measured in the speed range selected to be higher and/or smaller than the target speed, wherein an optimum speed with minimized vibration is determined and adjusted, and in which subsequently the processing of the workpiece is performed with the optimum speed.

2. The method of claim 1, **characterized in that** the speed range including the higher and smaller speeds is passed continuously.

3. The method of claim 1, **characterized in that** the speed range including the higher and smaller speeds is passed stepwise.

4. The method of one of claims 1 to 3, **characterized in that** the method is repeated in predetermined time intervals upon interruption of the processing.

5. The method of one of claims 1 to 4, **characterized in that** at least one additional sensor (1) is used for determining the vibrations.

6. The method of one of claims 1 to 5, **characterized in that** at least one measuring sensor (2) is used for determining the vibrations.

7. The method of one of claims 1 to 6, **characterized in that** at least a feed motion of a movement axis of the machine tool is adapted to the changed optimum speed.

8. The method of one of claims 1 to 7, **characterized in that** the measuring of the speed is performed as a measuring of the amplitude of the vibration.

9. The method of one of claims 1 to 8, **characterized in that** the measuring of the speed is performed as a measuring of a signal variation of a measuring sensor.

10. The method of one of claims 1 to 9, **characterized in that** the method is repeated in predetermined intervals.

11. The method of one of claims 1 to 10, **characterized in that** the method is repeated upon an alteration of the processing parameters of a workpiece.

## Revendications

1. Procédé d'usinage d'une pièce par enlèvement de copeaux au moyen d'une machine-outil et d'optimisation des vibrations de la machine-outil lors de l'usinage, dans le cadre duquel une opération d'usinage est interrompue, dans le cadre duquel un arbre entraîné (17) est mis en rotation à une vitesse de rotation de consigne, aucun autre mouvement n'étant réalisé le long des axes de mouvement de la machine-outil, dans le cadre duquel la vitesse de rotation de consigne est ensuite augmentée et/ou diminuée automatiquement d'au moins une valeur prédéfinie, les vibrations apparaissant étant mesurées dans la plage de vitesse de rotation sélectionnée supérieure et/ou inférieure à la vitesse de rotation de consigne, une vitesse de rotation optimale avec vibration minimisée étant déterminée et réglée, et dans le cadre duquel la pièce est ensuite usinée avec la vitesse de rotation optimale.

2. Procédé selon la revendication 1, **caractérisé en ce que** la plage de vitesse de rotation définie par la vitesse de rotation supérieure et la vitesse de rotation inférieure est balayée de manière continue.

3. Procédé selon la revendication 1, **caractérisé en ce que** la plage de vitesse de rotation définie par la vitesse de rotation supérieure et la vitesse de rotation inférieure est balayée graduellement.

4. Procédé selon l'une quelconque des revendications 1 à 3, **caractérisé en ce que** le procédé est répété dans des intervalles de temps prédéfinis lors de l'interruption de l'usinage.

5. Procédé selon l'une quelconque des revendications 1 à 4, **caractérisé en ce qu'**au moins un capteur (1) supplémentaire est utilisé pour déterminer les vibrations.

6. Procédé selon l'une quelconque des revendications 1 à 5, **caractérisé en ce qu'**au moins un enregistreur de mesure (2) est utilisé pour déterminer les vibrations.

7. Procédé selon l'une quelconque des revendications 1 à 6, **caractérisé en ce qu'**au moins un mouvement d'avance d'un axe de mouvement de la machine-outil est ajusté à la vitesse de rotation optimale modifiée.

8. Procédé selon l'une quelconque des revendications 1 à 7, **caractérisé en ce que** la mesure de la vitesse de rotation se fait sous forme de mesure de l'amplitude de la vibration.

9. Procédé selon l'une quelconque des revendications 1 à 8, **caractérisé en ce que** la mesure de la vitesse de rotation se fait sous forme de mesure de la modification du signal d'un enregistreur de mesure.

10. Procédé selon l'une quelconque des revendications 1 à 9, **caractérisé en ce que** le procédé est répété dans des intervalles de temps prédéfinis.

11. Procédé selon l'une quelconque des revendications 1 à 10, **caractérisé en ce que** le procédé est répété dans le cas d'une modification des paramètres d'usinage d'une pièce.
